# EUROPÄISCHE PATENTANMELDUNG

(11) **EP 2 679 916 A1**
(43) Veröffentlichungstag der Anmeldung: **01.01.2014**
(21) Anmeldenummer: 13405075.6
(22) Anmeldetag: 24.06.2013
(51) Int. Cl.: F24D 3/16, E04B 9/00, E04B 9/02, F24F 13/24, F24F 5/00

(54) **Deckenelement**

(30) Priorität: 26.06.2012 CH 8972012
(71) Anmelder: MWH Barcol-Air AG, 8603 Schwerzenbach (CH)
(72) Erfinder: Hecker, Tomas, 8603 Schwerzenbach (CH)
(74) Vertreter: Wagner, Wolfgang Heribert

(57) **Zusammenfassung**

Eine Deckenplatte weist eine untere Platte (1) und eine obere Platte (2) auf, welche jeweils Lochplatten sind, die an ebenen Streifen (7, 9) verklebt sind und Ausbuchtungen (8; 10) nach unten bzw. oben aufweisen, welche von schallabsorbierenden Absorptionskörpern (12) ausgefüllt sind. Quer über die Streifen (7) und zu den Ausbuchtungen (10) der oberen Platte (2) laufen parallele Rohre (3) zur Führung eines flüssigen Wärmeträgermediums. Sie durchdringen an den Ausbuchtungen (10) die obere Platte (2) und stehen mit derselben in engem wärmeleitenden Kontakt. An den Streifen (7, 9) sind durch die Deckenplatte durchgehende Austauschöffnungen (11) angebracht, welche den Austausch von Luft zwischen dem oberhalb der Deckenplatte liegenden Raum mit dem darunter liegenden Raum ermöglichen. Die Deckenplatte weist eine hohe Schallabsorption auf und erlaubt zugleich auch hohe Kühlleistung.

## Beschreibung

### Technisches Gebiet

Die Erfindung betrifft ein Deckenelement für eine Heiz- oder Kühldecke zur Klimatisierung eines Raumes.

### Stand der Technik

Ein gattungsgemässes Deckenelement ist aus EP 0 769 659 A1 bekannt. Es weist eine ebene einteilige Deckenplatte auf, mit mehreren parallelen geraden Führungen, die gerade Abschnitte eines mäanderförmigen Rohres zur Durchleitung eines flüssigen Wärmeträgermediums aufnehmen.

Zur Geräuschdämpfung kann eine Isolationsmatte oder ein anderes Dämpfungselement aufgelegt sein. Trotz solcher Massnahmen ist jedoch die Schallabsorption in manchen Fällen ungenügend.

### Darstellung der Erfindung

Der Erfindung liegt die Aufgabe zugrunde, ein gattungsgemässes Deckenelement anzugeben, das eine hohe Schallabsorption aufweist und somit eine starke Dämpfung von Geräuschen im klimatisierten Raum bewirkt, aber auch eine hohe Kühlleistung ermöglicht.

Diese Aufgabe wird durch die Merkmale im Kennzeichen des Anspruchs 1 erfüllt.

Darüber hinaus weist das erfindungsgemässe Deckenelement eine hohe mechanische Stabilität und Formkonstanz auf.

### Kurze Beschreibung der Zeichnungen

Im folgenden wird die Erfindung anhand von Figuren, welche lediglich Ausführungsbeispiele darstellen, näher erläutert. Es zeigen
- Fig. 1a: eine Draufsicht auf ein erfindungsgemässes Deckenelement gemäss einer ersten Ausführungsform,
- Fig. 1b: einen Schnitt längs B-B in Fig. 1a,
- Fig. 2: einen Schnitt durch ein erfindungsgemässes Deckenelement gemäss einer zweiten Ausführungsform,
- Fig. 3a: eine Draufsicht auf ein erfindungsgemässes Deckenelement gemäss einer dritten Ausführungsform,
- Fig. 3b: einen Schnitt längs B-B in Fig. 3a,
- Fig. 3c: einen Schnitt längs C=C in Fig. 3a, und
- Fig. 3d: einen Schnitt längs D-D in Fig. 3a.

### Wege zur Ausführung der Erfindung

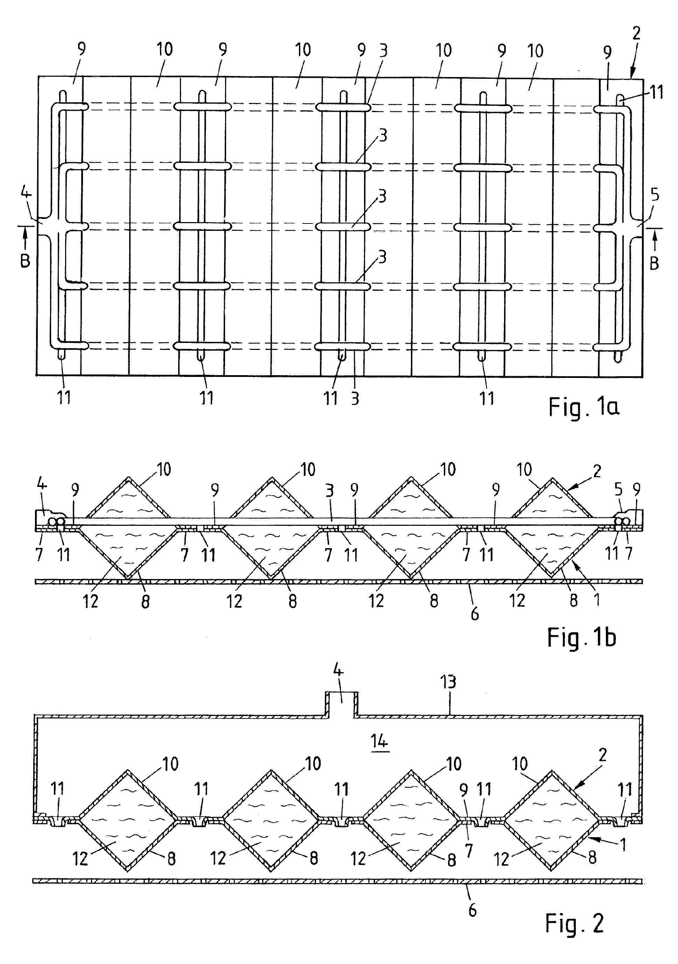

Fig. 1a, b zeigen ein erfindungsgemässes Deckenelement, welches etwa unterhalb einer Betondecke waagrecht aufgehängt sein kann, mit einer Deckenplatte, welche aus einer unteren Platte 1 besteht und einer mit ihr verbundenen oberen Platte 2. Über die Deckenplatte laufen parallel in einer Längsrichtung fünf über die Breite der Deckenplatte verteilte gerade Rohre 3 für ein flüssiges Wärmeträgermedium, welche über gebogene Verbindungsstücke jeweils mit einem Zuleitungsanschluss 4 und einem Ableitungsanschluss 5 verbunden sind. In Kontakt mit der Deckenplatte ist unterhalb derselben eine als Lochplatte mit grossem freien Querschnitt ausgebildete Verkleidungsplatte 6 angebracht.

Die untere Platte 1 weist parallele ebene Streifen 7 auf, zwischen denen jeweils eine Ausbuchtung 8 liegt, welche von zwei gegensinnig um 45° geneigten Streifen gebildet wird. Die obere Platte 2 weist entsprechende ebene Streifen 9 auf, welche jeweils mit einem der Streifen 7 der unteren Platte 1 verbunden, z.B. verklebt sind sowie zwischen den Streifen 9 liegende zu den Ausbuchtungen 8 der unteren Platte 1 spiegelsymmetrische Ausbuchtungen 10. Die unteren Streifen 7 bilden somit Kontaktflächen der unteren Platte 1, an denen sie an der oberen Platte 2 anliegt. In der Mitte der Streifen 7 und 9 sind deckungsgleiche, d.h. durch die Deckenplatte durchgehende, als in Querrichtung verlaufende Schlitze ausgebildete Austauschöffnungen 11 angebracht, welche den Austausch von Luft zwischen dem oberhalb der Deckenplatte, gewöhnlich zwischen derselben und einer Betondecke, liegenden Raum und dem unterhalb der Deckenplatte, d.h. zwischen derselben und der Verkleidungsplatte 6 liegenden Raum ermöglichen.

Die Rohre 3 laufen über die Streifen 9 und durch die Ausbuchtungen 10, d.h. abschnittsweise oberhalb der oberen Platte 2 und zwischen der unteren Platte 1 und der oberen Platte 2, wobei sie an den Übergängen die obere Platte 2 durchdringen, derart, dass sie fest und mit gut wärmeleitendem Kontakt in Öffnungen derselben sitzen. Dies kann auf besonders einfache Weise erreicht werden, indem dünne Kupferrohre verwendet werden, die nach Einschieben in die Deckenplatte durch Anlegen eines hohen Innendrucks leicht aufgeweitet werden.

Die jeweils von einer Ausbuchtung 8 der unteren Platte und der dieser gegenüberliegenden Ausbuchtung 10 der oberen Platte gebildeten in Querrichtung mit konstantem quadratischen Querschnitt durchgehenden und an den Enden durch Abschlussplatten verschlossenen Hohlräume sind jeweils von einem Absorptionskörper 12 aus schallabsorbierendem Material vollständig ausgefüllt. Es kann sich dabei etwa um ein weiches poröses Material wie Schaumstoff oder ein ebenfalls weiches faseriges Material wie Steinwolle handeln. Die untere Platte 1 ist als Akustikplatte ausgebildet, d.h. sie weist eine geringe Schallreflexion auf. Dies kann etwa dadurch erreicht werden, dass eine Lochung vorgesehen ist, d.h. die untere Platte 1 als Lochplatte ausgebildet ist oder dadurch, dass sie aus einem weichen Material besteht, z.B. aus einer dünnen Folie. Als Material wird in jedem Fall Aluminium bevorzugt. Die obere Platte 2 kann ebenfalls als Akustikplatte ausgebildet sein, vorzugsweise handelt es sich um eine Lochplatte aus Aluminium.

Das Deckenelement bietet aufgrund der grossen Absorptionskörper 12 und der guten Schalldurchlässigkeit der unteren Platte 1 ausgezeichnete Schallabsorptionseigenschaften, die durch die unebene Ausbildung der unteren Platte 1 mit überwiegend zur Waagrechten geneigten Abschnitten unterstützt wird, da von diesen Abschnitten reflektierter Schall überwiegend gegen andere Abschnitte der unteren Platte 1 gelenkt wird. Zugleich kann eine sehr hohe Kühlleistung erzielt werden, da die Rohre 3 mit der oberen Platte 2 und diese mit der unteren Platte 1 in sehr engem thermischen Kontakt stehen. Die untere Platte 1 wird also auch stark gekühlt und kühlt ihrerseits den Raum durch Strahlungsaustausch über die Verkleidungsplatte 6. Zusätzlich erfolgt ein intensiver Austausch von Luft durch die Austauschöffnungen 11 und die Verkleidungsplatte 6 hindurch, welcher die Kühlleistung weiter verbessert und auch den zusätzlichen Einbezug der Betondecke in die Kühlung des Raumes ermöglicht.

Aufgrund der über die Fläche verteilten Verbindungen zwischen der oberen Platte 2 und der unteren Platte 1 sowie der Ausbuchtungen beider ist das Deckenelement sehr stabil und hält seine Form auch unter mechanischer Belastung.

Fig. 2 zeigt ein ähnliches Deckenelement, bei welchem allerdings Luft als Wärmetransportmedium eingesetzt wird. Dementsprechend ist eine Kappe 13 vorgesehen, welche an den Rand der oberen Platte 1 anschliesst und zusammen mit dem Deckenelement eine Kammer 14 umschliesst mit einem Zuleitungsanschluss 4 zur Zuleitung von - normalerweise gekühlter - Luft. Die Austauschöffnungen 11 sind als Düsen ausgebildet, da lediglich aus der Kammer 14 nach unten gerichtete Luftströmung auftritt. Im übrigen entspricht die Deckenplatte im Aufbau der im Zusammenhang mit der ersten Ausführungsform beschriebenen. Rohre für die Durchleitung eines flüssigen Wärmeträgermediums sind nicht gezeigt, können aber zusätzlich vorgesehen sein, wobei sie bezüglich Ausbildung und Anordnung den Rohren gemäss der ersten Ausführungsform entsprechen können. Die Verkleidungsplatte 6 ist hier mit Abstand unterhalb der Deckenplatte angeordnet.

Die Kühlluft strömt nicht nur durch die Austauschöffnungen 11 und die Verkleidungsplatte 6 in den Raum, sie kühlt auch die Deckenplatte, wobei unmittelbar vor allem die obere Platte 2 gekühlt wird, was sich aber durch den engen thermischen Kontakt auch stark auf die untere Platte 1 auswirkt, die dann zusätzlich wieder über die Verkleidungsplatte 6 den Raum durch Strahlungsaustausch kühlt.

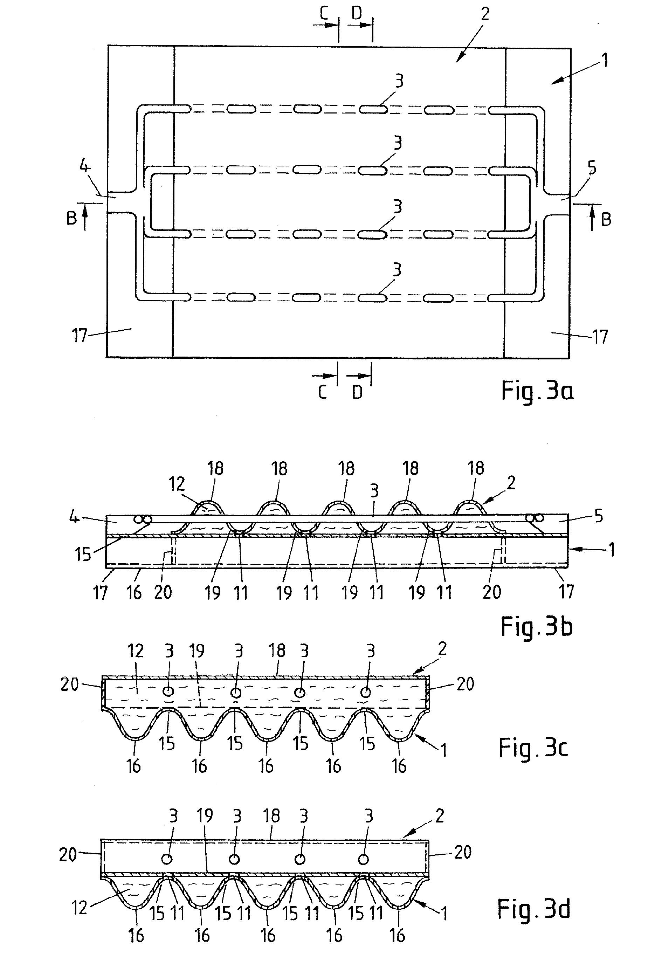

Eine dritte Ausführungsform ist in den Figuren 3a bis 3d dargestellt.

Sie weist wiederum eine aus einer unteren Platte 1 und einer oberen Platte 2 bestehende Deckenplatte auf. Die untere Platte 1 ist als gewellte akustische Platte, vorzugsweise als Lochplatte, ausgebildet und die obere Platte 2 ebenfalls als gewellte Lochplatte. Bei der unteren Platte 1, die sich über die ganze Fläche des Deckenelements erstreckt, folgen regelmässig aufeinanderfolgende parallele gerade Kämme 15 und Gräben 16 einer mit der Längsrichtung übereinstimmenden Vorzugsrichtung. Die obere Platte 2, welche sich nicht über die ganze Länge erstreckt, sondern an den Enden Randstreifen 17 freilässt, zeigt eine entsprechende regelmässige Abfolge von einer mit der Querrichtung übereinstimmenden Vorzugsrichtung folgenden Kämmen 18 und Gräben 19, d.h. die Vorzugsrichtung schliesst mit der der unteren Platte 1 einen Kreuzungswinkel von 90° ein. Eine Verkleidungsplatte ist nicht gezeigt, kann aber vorhanden sein.

Vier parallele Rohre 3 für ein flüssiges Wärmeträgermedium sind auf halber Höhe angeordnet und erstrecken sich in Längsrichtung über annähernd die ganze Länge der Deckenplatte. Sie durchdringen mehrmals die obere Platte 2, sodass sie abschnittsweise oberhalb der oberen Platte 2 und zwischen derselben und der unteren Platte 1 verlaufen. Sie sind dabei wie bei der Deckenplatte gemäss der ersten Ausführungsform fest in die Löcher in der oberen Platte 2 eingepresst, sodass sie thermisch eng an dieselbe gekoppelt sind. An den Enden sind sie über gekrümmte Verbindungsstücke jeweils mit einem Zuleitungsanschluss 4 und einem Ableitungsanschluss 5 verbunden.

Die untere Platte 1 und die obere Platte 2 umschliessen einen zusammenhängenden Hohlraum, der am Umfang durch Abschlussplatten 20 verschlossen ist und wiederum von einem Absorptionskörper 12 ausgefüllt wird. Wenn die untere Platte 1 an den von der oberen Platte 2 freien Randstreifen 17 von einer z.B. ebenen Platte bedeckt wird, können sich der Hohlraum und der ihn ausfüllende Absorptionskörper im Gegensatz zur Darstellung in Fig. 3b auch über die ganze Länge der Deckenplatte erstrecken.

Wo immer ein Graben 19 der oberen Platte 2 einen Kamm 15 der unteren Platte 1 kreuzt, weist die letztere eine Kontaktfläche auf, wo sie von der ersteren berührt wird. In der Mitte der Kontaktfläche ist jeweils eine durch die obere Platte 2 und die untere Platte 1 durchgehende runde Austauschöffnung 11 vorgesehen. In der unmittelbaren Umgebung der Austauschöffnung 11 sind die obere Platte 2 und die untere Platte 1 verbunden, z.B. verklebt, wodurch sie auch thermisch eng miteinander gekoppelt sind.

Das Deckenelement hat ähnlich günstige akustische und thermische Eigenschaften wie das Deckenelement gemäss der ersten Ausführungsform. Aufgrund der quer gewellten oberen Platte 2 und der längs gewellten unteren Platte 1 und der Verbindungen zwischen beiden an den über annähernd die ganze Fläche verteilten Kontaktflächen ist das Deckenelement sehr steif und mechanisch belastbar, selbst dann, wenn die gewählten Materialien eher weich sind.

### Bezugszeichenliste

- 1: untere Platte
- 2: obere Platte
- 3: Rohr
- 4: Zuleitungsanschluss
- 5: Ableitungsanschluss
- 6: Verkleidungsplatte
- 7: Streifen
- 8: Ausbuchtung
- 9: Streifen
- 10: Ausbuchtung
- 11: Austauschöffnung
- 12: Absorptionskörper
- 13: Kappe
- 14: Kammer
- 15: Kamm
- 16: Graben
- 17: Randstreifen
- 18: Kamm
- 19: Graben
- 20: Abschlussplatte

## Patentansprüche

1. Deckenelement für eine Heiz- oder Kühldecke zur Klimatisierung eines Raumes, mit einer gegen den Raum gerichteten Deckenplatte und mindestens einem Zuleitungsanschluss (4) für die Aufnahme eines Wärmeträgermediums, **dadurch gekennzeichnet, dass** die Deckenplatte eine obere Platte (2) und eine als Akustikplatte mit geringer Schallreflexion ausgebildete untere Platte (1) aufweist und dass die obere Platte (2) die untere Platte (1) an über die Fläche der ersteren verteilten Kontaktflächen berührt und die Deckenplatte an mindestens einem Teil der Kontaktflächen durchgehende Austauschöffnungen (11) aufweist, während die obere Platte (2) und die untere Platte (1) im übrigen voneinander beabstandet sind und der zwischen ihnen liegende Hohlraum mindestens teilweise mit schallabsorbierendem Material gefüllt ist.

2. Deckenelement nach Anspruch 1, **dadurch gekennzeichnet, dass** die untere Platte (1) uneben ist mit unterschiedlich gegenüber der Waagrechten geneigten Abschnitten.

3. Deckenelement nach Anspruch 2, **dadurch gekennzeichnet, dass** die untere Platte (1) gewellt ist mit jeweils in einer Vorzugsrichtung durchgehenden parallelen Kämmen (15) und Gräben (16).

4. Deckenelement nach einem der Ansprüche 1 bis 3, **dadurch gekennzeichnet, dass** die obere Platte (2) ebenfalls als Akustikplatte ausgebildet ist.

5. Deckenelement nach einem der Ansprüche 1 bis 4, **dadurch gekennzeichnet, dass** es einen Ableitungsanschluss (5) zur Abgabe des Wärmeträgermediums aufweist sowie mindestens ein mit dem Zuleitungsanschluss (4) und dem Ableitungsanschluss verbundenes Rohr (3) zur Durchleitung des Wärmeträgermediums, welches mit der oberen Platte (2) in unmittelbarer wärmeleitender Verbindung steht.

6. Deckenelement nach Anspruch 5, **dadurch gekennzeichnet, dass** das mindestens eine Rohr (3) an mehreren Stellen durch die obere Platte (2) durchgeführt ist, sodass es abschnittsweise zwischen der unteren Platte (1) und der oberen Platte (2) liegt.

7. Deckenelement nach einem der Ansprüche 3 bis 6, **dadurch gekennzeichnet, dass** auch die obere Platte (2) gewellt ist mit jeweils in einer Vorzugsrichtung durchgehenden parallelen Kämmen (18) und Gräben (19) und dass die Vorzugsrichtungen der oberen Platte (2) und der unteren Platte (1) einen Kreuzungswinkel einschliessen, der grösser ist als 0° und kleiner als 180°.

8. Deckenelement nach Anspruch 7, **dadurch gekennzeichnet, dass** dass der Kreuzungswinkel bei 90° liegt.

9. Deckenelement nach Anspruch 7 oder 8, **dadurch gekennzeichnet, dass** die Kämme (15) der unteren Platte (1) an Kreuzungsstellen zur Bildung von Kontaktflächen jeweils die Gräben (19) der oberen Platte (2) berühren.

10. Deckenelement nach einem der Ansprüche 1 bis 9, **dadurch gekennzeichnet, dass** es eine Kappe (13) umfasst, welche eine oberhalb der unteren Platte (1) liegende Kammer (14) abschliesst und mindestens eine Zuleitungsöffnung (4) für die Zufuhr von Luft aufweist.

11. Deckenelement nach einem der Ansprüche 1 bis 10, **dadurch gekennzeichnet, dass** das schallabsorbierende Material als mindestens ein Schaumstoff oder Fasermaterial umfassender Absorptionskörper (12) ausgebildet ist.
